# EUROPEAN PATENT APPLICATION

(11) **EP 4 578 348 A1**
(43) Date of publication of application: **02.07.2025**
(21) Application number: 24221837.8
(22) Date of filing: 19.12.2024
(51) Int. Cl.: A47J 31/60

(54) **LIQUID MEAL MAKING SYSTEM AND CLEANING METHOD OF LIQUID MEAL MAKING SYSTEM**

(30) Priority: 29.12.2023 CN 202311849041
(71) Applicant: Kalerm Technology (Suzhou) Co., Ltd, Suzhou Jiangsu 215134 (CN)
(72) Inventor: SHU, Hebo, Suzhou, Jiangsu 215134 (CN); WANG, Qingli, Suzhou, Jiangsu 215134 (CN); LU, Dean, Suzhou, Jiangsu 215134 (CN)
(74) Representative: Winter, Brandl - Partnerschaft mbB

(57) **Abstract**

A liquid meal making system and a cleaning method therefor. The liquid meal making system includes: a liquid meal maker with a fluid pump; an edible liquid module connected to the fluid pump through pipelines for providing edible liquid; and a cleaning module connected to the fluid pump through pipelines for providing cleaning agent and cleaning solution. In a dispensing mode, the edible liquid module provides edible liquid for making liquid meal, the fluid pump extracting edible liquid from the edible liquid module. In a cleaning mode, the cleaning module provides cleaning solution for cleaning edible liquid lines, the fluid pump extracting cleaning agent and cleaning solution from the cleaning module. The edible liquid extraction process, cleaning agent extraction process and cleaning solution extraction process all share the use of the fluid pump, thereby simplifying the system structure.

## Description

### TECHNICAL FIELD

The present application relates to the field of food equipment, particularly to a liquid meal making system and a cleaning method of the liquid meal making system.

### BACKGROUND

With the growing demand for various types of liquid meals such as coffee, milk, and milk tea, the functions of liquid meal making systems used for preparing liquid meals are continually expanding. For example, current liquid meal making systems can automatically prepare cleaning solution and clean the pipelines using the prepared cleaning solution.

However, in the prior art, such liquid meal making systems capable of automatically preparing cleaning solution and automatically cleaning pipelines have relatively complex structures.

### SUMMARY

The present application provides a liquid meal making system and a cleaning method of the liquid meal making system, thereby simplifying the structure of the liquid meal making system to some extent while achieving the preparation of cleaning solution and cleaning of edible liquid line using the cleaning solution.

In one aspect, the present application provides a liquid meal making system, including: a liquid meal maker with a fluid pump;
an edible liquid module connected to the fluid pump through pipelines for providing edible liquid;
a cleaning module connected to the fluid pump through pipelines for providing cleaning agent and cleaning solution;
wherein the liquid meal maker has a dispensing mode and a cleaning mode, wherein in the dispensing mode, the edible liquid module provides the edible liquid for making liquid meal, and the dispensing mode includes an edible liquid extraction process in which the fluid pump extracts the edible liquid from the edible liquid module; in the cleaning mode, the cleaning module provides the cleaning solution for cleaning the edible liquid line through which the edible liquid flows; the cleaning mode comprises a cleaning agent extraction process and a cleaning solution extraction process; the cleaning agent extraction process involves the fluid pump extracting the cleaning agents from the cleaning module; the cleaning solution extraction process involves the fluid pump extracting the cleaning solutions from the cleaning module;
wherein the edible liquid extraction process, the cleaning agent extraction process and the cleaning solution extraction process all share the use of the fluid pump.

In another aspect, the present application provides a cleaning method of a liquid meal making system, wherein the liquid meal making system including: a liquid meal maker with a fluid pump; an edible liquid module connected to the fluid pump through pipelines, wherein under the driving force of the fluid pump, the edible liquid module is configured to provide edible liquid to the liquid meal maker; a cleaning module connected to the fluid pump through pipelines, the cleaning module including a cleaning solution container;
the method including:
controlling the fluid pump to extract cleaning agent from a cleaning agent container into the cleaning solution container;
controlling the fluid pump to extract solvent from a solvent supply line into the cleaning solution container, to mix with the cleaning agent in the cleaning solution container to form cleaning solution;
controlling the fluid pump to extract the cleaning solution from the cleaning solution container, to clean the edible liquid line through which the edible liquid flows in the liquid meal making system.

In multiple embodiments provided by the present application, the fluid pump incorporated in the liquid meal maker is shared in the processes of extracting edible liquid, extracting cleaning agent and extracting cleaning solution, thereby obviating the necessity for additional power sources for the cleaning agent extraction process and/or cleaning solution extraction process, thus simplifying the structure of the liquid meal making system to some extent and reducing the cost of the liquid meal making system.

### BRIEF DESCRIPTION OF THE DRAWINGS

To more clearly illustrate the technical solutions in the embodiments of the present disclosure or in the prior art, the drawings needed in the description of the embodiments or prior art will be briefly introduced below. Obviously, the drawings described below are only some embodiments of the present disclosure. For those skilled in the art, other drawings can be obtained based on these drawings without creative effort.
Figure 1 is an overall modular schematic diagram of the liquid meal making system according to an embodiment of the present application.
Figure 2 is a modular schematic diagram of the liquid meal making system according to an embodiment of the present application.
Figure 3 is a modular schematic diagram of the liquid meal making system according to an embodiment of the present application.
Figure 4 is an overall modular schematic diagram of the liquid meal making system including a refrigeration device according to an embodiment of the present application.
Figure 5 is an overall modular schematic diagram of the liquid meal making system including a refrigeration device according to an embodiment of the present application.
Figure 6 is a flow diagram of the cleaning method of the liquid meal making system according to an embodiment of the present application.

For better description and explanation of the embodiments and/or embodiments disclosed herein, reference may be made to one or more drawings. The additional details or examples used to describe the drawings should not be considered as limitations on the scope of any of the disclosed inventions, the presently described embodiments and/or examples, or the presently understood best mode of these inventions.

### DETAILED DESCRIPTION

The technical solutions in the embodiments of the present application will be clearly and completely described in conjunction with the drawings of the embodiments of the present application. Obviously, the described embodiments are only a part of the embodiments of the present application, not all of them. Based on the embodiments of the present application, all other embodiments obtained by those skilled in the art without creative effort fall within the protection scope of the present application.

In the description of the embodiments of the present application, it should be understood that the terms "first", "second" are used only for descriptive purposes and cannot be understood as indicating or implying relative importance or implicitly indicating the number of technical features indicated. Thus, features defined as "first", "second" may explicitly or implicitly include one or more features. In the description of the embodiments of the present application, "multiple" means two or more, unless otherwise explicitly specified.

A liquid meal refers to food that is in fluid or semi-liquid form. Specifically, for example, liquid meals can be beverages such as coffee, milk, and soybean milk.

The liquid meal maker is capable of not only making liquid meals but also has the function of cleaning the edible liquid line through which the edible liquid flows.

In the related technology, the liquid meal maker may include a fluid pump and edible liquid lines. During the preparation of liquid meals, the edible liquid flows through these lines. The fluid pump can be used to extract edible liquid into the edible liquid line, thereby completing the preparation of liquid meals according to the specified recipe.

For example, taking a coffee machine as an example of the liquid meal maker. The coffee machine can make different types of coffee, and milk may be added when necessary. Coffee contains certain oils, while milk contains abundant proteins. After these liquids flow through the pipelines in the coffee machine, there may be some residue in the pipelines. If exposed to air for a long time, bacteria may grow in the pipelines.

To achieve cleaning of the edible liquid lines through which edible liquid flows in the liquid meal maker, after preparing the cleaning solution, operators place the container containing cleaning solution in the liquid meal maker and start the cleaning process of the liquid meal maker to clean the internal pipelines of the liquid meal maker.

However, operators need to prepare cleaning solution every time the edible liquid lines need to be cleaned, which reduces their work efficiency.

Therefore, in the related technology, a dispensing device for automatically dispensing cleaning agent is provided at the container containing cleaning solution. According to the dispensing instructions from the control unit, the dispensing device dispenses a specified amount of cleaning agent into the container, which then forms cleaning solution after mixing with a specified amount of water in the container.

However, setting up a dispensing device in the liquid meal maker requires significant adjustments to the internal structure of the liquid meal maker. Specifically, for example, the dispensing device may need independent driving devices and control devices, thus requiring additional power supply circuits to be designed in the liquid meal maker to power the dispensing device. Furthermore, to facilitate the maintenance and replacement of the dispensing device, it may need to be designed as a removable module. All these factors increase the complexity and cost of the internal structure of the liquid meal maker to some extent.

Therefore, it is necessary to provide a technical solution that is simple and suitable for internal cleaning of the liquid meal maker.

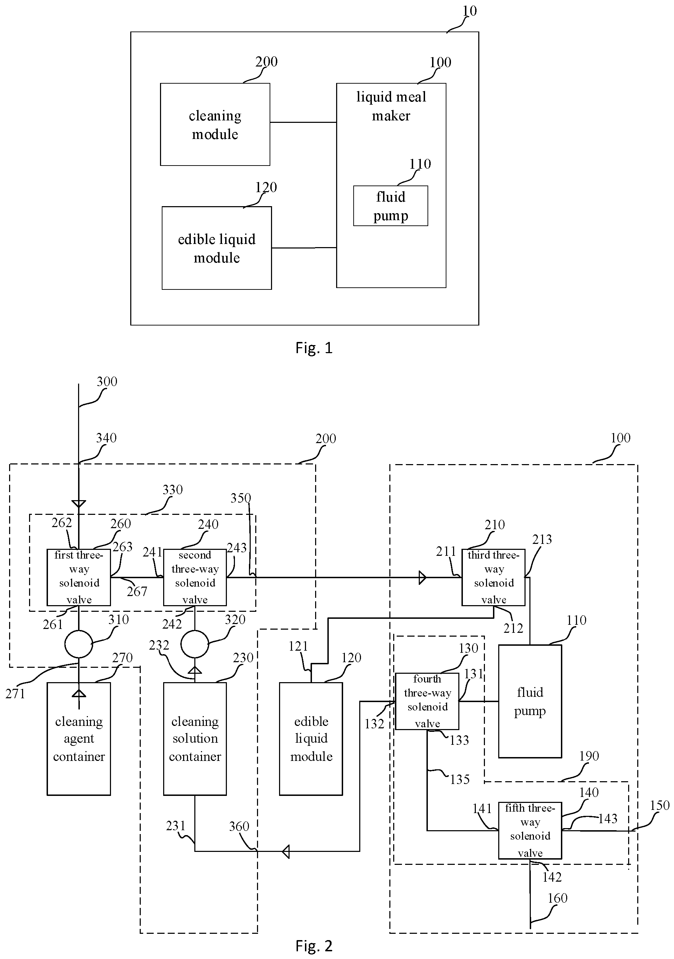

Referring to Figures 1 and 2, in one embodiment of the present application, a liquid meal making system 10 is provided. The liquid meal making system 10 may include a liquid meal maker 100 with a fluid pump 110; an edible liquid module 120 connected to the fluid pump 110 through pipelines, the edible liquid module 120 can be used to provide edible liquid; a cleaning module 200 connected to the fluid pump 110 through pipelines for providing cleaning agent and cleaning solution. The liquid meal maker 100 has a dispensing mode and a cleaning mode. In the dispensing mode, the edible liquid module 120 provides edible liquid for making liquid meal, and the dispensing mode includes an edible liquid extraction process in which the fluid pump 110 extracts edible liquid from the edible liquid module 120. In the cleaning mode, the cleaning module 200 provides cleaning solution for cleaning the edible liquid line through which the edible liquid flows; the cleaning mode further comprises a cleaning agent extraction process and a cleaning solution extraction process; the cleaning agent extraction process involves the fluid pump 110 extracting the cleaning agents from the cleaning module 200; the cleaning solution extraction process involves the fluid pump 110 extracting the cleaning solutions from the cleaning module 200.The edible liquid extraction process, cleaning agent extraction process and cleaning solution extraction process all share the use of the fluid pump 110.

In the present embodiment, within the liquid meal making system 10, the cleaning module 200 may provide cleaning solution for the liquid meal maker 100 during the cleaning process in cleaning mode, and the edible liquid module 120 may provide edible liquid as raw material for liquid meals to the liquid meal maker 100. In a preferred embodiment, the liquid meal making system 10 may be used for making coffee beverages, accordingly, the liquid meal maker 100 may be a coffee machine. The edible liquid module 120 may provide milk as the edible liquid, accordingly, the edible liquid module 120 may be a milk carton.

In the present embodiment, the fluid pump 110 can extract and transport liquid through connected pipelines. The fluid pump 110 may be integrated inside the liquid meal maker 100, so it can operate according to actual functional logic during the operation of the liquid meal maker 100. Specifically, for example, the fluid pump 110 can be used to extract and transport edible liquid, water, cleaning agent, cleaning solution, etc. through connected pipelines.

In the present embodiment, liquid meal can be food in fluid or semi-liquid form. Edible liquid can be the liquid meal material used for preparing liquid meal. Of course, in some embodiments, edible liquid in the liquid meal maker 100 may also refer to the liquid meal. Specifically, for example, edible liquid in a coffee machine may include coffee or milk, etc. Or, in some embodiments, for a liquid meal making system that makes hot milk, the edible liquid may be room temperature milk.

In the present embodiment, the edible liquid line can be the pipeline through which edible liquid flows during liquid meal preparation. Corresponding to the liquid meal preparation steps that need to be executed during the preparation process, the edible liquid line may be connected with devices that implement corresponding liquid meal preparation steps to complete the preparation of liquid meal. Specifically, for example, devices implementing corresponding liquid meal preparation steps may be heating devices, foaming devices, etc. The present specification does not impose specific limitations on these devices.

In the present embodiment, the edible liquid module 120 can be used to provide edible liquid. Specifically, for example, the edible liquid module 120 may be an edible liquid container for containing edible liquid. Of course, in some cases, the edible liquid module 120 may also be an edible liquid preparation module, the edible liquid output from the edible liquid preparation module can serve as liquid meal material for preparing liquid meal. The edible liquid module 120 may be accommodated within the housing of the liquid meal maker 100, making it an integral part of the liquid meal maker 100. Of course, the edible liquid module 120 may also be independent from the liquid meal maker 100 and connected to the fluid pump 110 of the liquid meal maker 100 through pipelines. Alternatively, in some embodiments, the edible liquid module 120 may also be a pipeline providing edible liquid, for example, the edible liquid module 120 may be an edible liquid extraction line 121.

In the present embodiment, the cleaning module 200 can be used to provide cleaning agent and cleaning solution. The cleaning module 200 may be an independent component external to the liquid meal maker 100. For example, the cleaning module 200 may serve as a cleaning function accessory of the liquid meal maker 100. Of course, in some embodiments, the cleaning module 200 may also be provided inside the liquid meal maker 100 as part of the liquid meal maker 100. The cleaning module 200 may be connected to the fluid pump 110 of the liquid meal maker 100 through pipelines. The cleaning module 200 may be provided with a cleaning solution container 230. The cleaning solution container 230 can be used to contain prepared cleaning solution. The cleaning module 200 may also be provided with an accommodating portion for accommodating a cleaning agent container 270 that provides cleaning agent. In some embodiments, as the cleaning agent is a consumable, the cleaning agent container 270 is provided within the cleaning module 200 in a replaceable manner, facilitating timely replacement of the cleaning agent container 270 or replenishment of cleaning agent into the cleaning agent container 270. It can be understood that the cleaning agent container 270 may not be part of the cleaning module 200, and the two can be considered in a cooperative relationship.

In the present embodiment, the liquid meal maker 100 has a dispensing mode, which can be the operating mode for the liquid meal maker 100 to prepare liquid meal. Specifically, for example, users can issue liquid meal preparation instructions through the operation interface provided by the liquid meal maker 100, and the liquid meal maker 100 prepares liquid meal for users according to the instructions. The dispensing mode includes an edible liquid extraction process in which the fluid pump extracts edible liquid from the edible liquid module. In the dispensing mode, the liquid meal maker 100 can execute the edible liquid extraction process. Specifically, when the edible liquid extraction process is executed, the inlet of the fluid pump 110 is connected to the edible liquid module 120 containing edible liquid, allowing the fluid pump 110 to extract edible liquid from the edible liquid module 120 into the edible liquid line. Furthermore, the liquid meal maker 100 will complete the preparation of liquid meal according to corresponding liquid meal preparation steps. In some embodiments, edible liquid may also be provided through external pipelines. Accordingly, when the edible liquid extraction process is executed, the inlet of the fluid pump 110 may be connected to such external pipeline.

In the present embodiment, the liquid meal maker 100 may also have a cleaning mode for cleaning the edible liquid line. The cleaning mode includes a cleaning agent extraction process in which the fluid pump extracts cleaning agent from the cleaning module, and a cleaning solution extraction process in which cleaning solution is extracted from the cleaning module. In cleaning mode, the liquid meal maker 100 can execute the cleaning agent extraction process for preparing cleaning solution, and the cleaning solution extraction process for extracting cleaning solution to clean the edible liquid line.

In the present embodiment, the cleaning solution can be a pre-mixed solution used for cleaning edible liquid residue in the edible liquid line. The cleaning solution may include at least cleaning agent and solvent used for dissolving the cleaning agent, where the cleaning agent and solvent mix to form the cleaning solution. The cleaning agent can be a substance capable of cleaning and removing edible liquid residue in the edible liquid lines. The solvent is a substance that can mix and dissolve with the cleaning agent, meaning the solvent can serve to dilute the cleaning agent. In some embodiments, the solvent may be water. Of course, the solvent is not limited to water and may also be an aqueous solution suitable for dissolving the cleaning agent. Those skilled in the art can select appropriate solvent according to actual product requirements and known knowledge.

In cleaning mode, the liquid meal maker 100 can execute the cleaning solution extraction process to extract cleaning solution from the cleaning module 200 to use the extracted cleaning solution to clean the edible liquid line. The liquid meal maker 100 may execute the cleaning agent extraction process to prepare cleaning solution when the cleaning solution in the cleaning module 200 is exhausted. Of course, in some embodiments, the liquid meal maker 100 may first execute a cleaning agent extraction process to prepare cleaning solution each time the cleaning mode is started, and then execute the cleaning solution extraction process. Each time of prepared cleaning solution can be adapted to the cleaning solution consumed in executing one cleaning mode. It can be understood that each time of prepared cleaning solution will be consumed completely in one run of cleaning mode.

Specifically, when executing the cleaning agent extraction process, the cleaning agent container 270 accommodated in the cleaning module 200 and the inlet of the fluid pump 110 can be connected, allowing the fluid pump 110 to extract cleaning agent. When executing the solvent extraction process, the solvent supply line 300 providing solvent and the inlet of the fluid pump 110 can be connected, allowing the fluid pump 110 to extract solvent, thereby allowing the solvent and cleaning agent to mix and form cleaning solution.

In the present embodiment, by using the same fluid pump 110 to provide driving power for both the edible liquid extraction process and cleaning agent extraction process, as well as cleaning solution extraction process, that is, sharing the fluid pump 110 inherent to the liquid meal maker 100 in the processes of extracting edible liquid, extracting cleaning agent and extracting cleaning solution, no additional power source is needed for the cleaning agent extraction process and cleaning solution extraction process. This can simplify the structure of the liquid meal making system 10 to some extent and also reduce the cost of the liquid meal making system 10.

In some embodiments, the liquid meal maker 100 may also include a rinsing mode, in which water is used to rinse the edible liquid line. The rinsing mode includes a water extraction process in which the fluid pump 110 extracts water; that is, the water extraction process is also implemented through the fluid pump 110. The water extraction process, edible liquid extraction process, cleaning agent extraction process and cleaning solution extraction process all share the use of the fluid pump 110.

By using the same fluid pump 110 to provide driving power for the water extraction process, edible liquid extraction process, cleaning agent extraction process and cleaning solution extraction process, that is, sharing the fluid pump 110 inherent to the liquid meal maker 100 in the processes of extracting water, edible liquid, cleaning agent and cleaning solution, no additional power source is needed for the water extraction process, cleaning agent extraction process and cleaning solution extraction process. This further simplifies the structure of the liquid meal making system 10 and further reduces the cost of the liquid meal making system 10.

In the present embodiment, water can be provided through a water line. This water line can provide water for rinsing the edible liquid line. In some embodiments, this water line may also provide water needed for preparing liquid meal. In some embodiments, the solvent used in cleaning mode may also be water. Accordingly, the water line may also serve as the solvent supply line 300. In rinsing mode, when the liquid meal maker 100 executes the water extraction process, the fluid pump 110 may be connected to the solvent supply line 300.

In some embodiments, the cleaning module 200 may include a cleaning solution container 230; in the cleaning agent extraction process, the cleaning agent is extracted by the fluid pump 110 into the cleaning solution container 230. The cleaning mode also includes a solvent extraction process, in which the fluid pump 110 is used to extract solvent into the cleaning solution container 230; wherein the solvent mixes with the cleaning agent in the cleaning solution container 230 to form cleaning solution.

In the present embodiment, the liquid meal maker 100 can automatically prepare cleaning solution. Manual preparation of cleaning solution is time-consuming and labor-intensive, and the control of cleaning agent and solvent dosage heavily depends on operators. Specifically, in cleaning mode, the liquid meal maker 100 may first execute the cleaning agent extraction process, during which the cleaning agent will be extracted from the cleaning agent container 270 under the drive of the fluid pump 110, and when the required dosage is reached, it will switch to execute the solvent extraction process. Preferably, the cleaning agent extraction process is executed before the solvent extraction process. After executing cleaning agent extraction, there may be more cleaning agent remaining in the pipeline, and after switching to the solvent extraction process, the cleaning agent in the pipeline will be carried into the cleaning solution container 230 of the cleaning module 200 along with the solvent and form cleaning solution.

In some embodiments, the cleaning module 200 may be provided with a cleaning agent intake line 271. The cleaning agent intake line 271 may be configured to extend into the cleaning agent container 270 accommodated in the cleaning module 200. Of course, the cleaning agent container 270 may not be accommodated within the cleaning module 200. The cleaning solution container 230 is connected with an inlet pipe 231 and an outlet pipe 232. The outlet of the fluid pump 110 may be connected to the inlet pipe 231. The liquid meal making system further includes a first flow control assembly 330, which is respectively connected to the solvent supply line 300 that provides solvent, cleaning agent intake line 271, outlet pipe 232 and the inlet of the fluid pump 110.

In the present embodiment, the cleaning module 200 may accommodate a cleaning agent container 270. It can be understood that the cleaning agent container 270 may be a replaceable consumable, making the cleaning agent container 270 not a component of the cleaning module 200 but used in cooperation with the cleaning module 200. Furthermore, the cleaning module 200 may be provided with a cleaning agent intake line 271, which can extend into the cleaning agent container 270 to achieve extraction of cleaning agent from the cleaning agent container 270 under the drive of the fluid pump 110.

In the present embodiment, the cleaning solution container 230 may be connected with an inlet pipe 231 and an outlet pipe 232. The inlet pipe 231 can be used for liquid to flow into the cleaning solution container 230. Specifically, the cleaning agent extracted during the cleaning agent extraction process and/or the solvent extracted during the solvent extraction process will enter the cleaning solution container 230 through the inlet pipe 231. The cleaning solution in the cleaning solution container 230 can flow out of the cleaning solution container 230 through the outlet pipe 232.

In the present embodiment, according to the direction of driven liquid flow, the fluid pump 110 may have an inlet and an outlet. Under the drive of the fluid pump 110, liquid can enter the fluid pump 110 from the inlet and flow out from the outlet. In the present embodiment, the outlet of the fluid pump 110 is connected to the inlet pipe 231, allowing the cleaning agent and/or solvent extracted by the fluid pump 110 to flow into the cleaning solution container 230 through the inlet pipe 231 under the drive of the fluid pump 110.

In the present embodiment, in cleaning mode, the first flow control assembly 330 is controllable to connect the cleaning agent intake line 271 with the inlet of the fluid pump 110, and cut off both the outlet pipe 232 and solvent supply line 300, at this time the fluid pump 110 can extract cleaning agent from the cleaning solution container 230, implementing the cleaning agent extraction process, and the extracted cleaning agent flows into the cleaning solution container 230 through the inlet pipe 231. Also, the first flow control assembly 330 is controllable to connect the solvent supply line 300 with the inlet of the fluid pump 110, and cut off both the outlet pipe 232 and cleaning agent intake line 271, at this time the fluid pump 110 can extract solvent, implementing the solvent extraction process, and the extracted solvent flows into the cleaning solution container 230 through the inlet pipe 231, where the solvent mixes with the cleaning agent to form cleaning solution. Also, the first flow control assembly 330 is controllable to connect the outlet pipe 232 with the inlet of the fluid pump 110, and cut off both the cleaning agent intake line 271 and solvent supply line 300, the fluid pump 110 can extract cleaning solution from the cleaning solution container 230, implementing the cleaning solution extraction process.

It can be understood that the liquid meal maker 100 may integrate a control unit that can execute set control logic. Thus, the liquid meal maker 100 can control the first flow control assembly 330 to connect the required pipelines when corresponding processes need to be executed.

In the present embodiment, when the liquid meal maker 100 is in cleaning mode, it can sequentially execute the cleaning agent extraction process, solvent extraction process and cleaning solution extraction process, automatically completing the cleaning solution preparation process and the cleaning solution extraction process without requiring manual operation, bringing convenience to operators. It can be understood that the cleaning solution preparation process includes the cleaning agent extraction process and solvent extraction process.

In the present embodiment, the first flow control assembly 330 may be an integral complex valve body and can provide multiple ports, as well as achieve connection between any two of the cleaning agent intake line 271, inlet of the fluid pump 110, outlet pipe 232 and solvent supply line 300 as needed. Of course, the first flow control assembly 330 may also be implemented by multiple valves, with no limitation on the number of valves, such as 1, 2, 3, 4, 5, etc., which will not be elaborated here.

In the present embodiment, the first flow control assembly 330 may serve as a component unit of the entire liquid meal making system 10. Specifically, the first flow control assembly 330 may be provided in parallel with the cleaning module 200, liquid meal maker 100, and edible liquid module 120. Of course, in some embodiments, to improve the integration degree of the liquid meal making system 10 and reduce space occupation, the first flow control assembly 330 may be integrated within the cleaning module 200. Of course, when the liquid meal making system 10 includes other accessories used in cooperation with the liquid meal maker 100, the first flow control assembly 330 may also be integrated within corresponding accessories. Specifically, for example, the liquid meal making system 10 may also include a refrigeration device or heating device used in cooperation with the liquid meal maker 100, and the first flow control assembly 330 may also be integrated within the refrigeration device or heating device.

In the present embodiment, the execution of the entire cleaning mode can be divided into several stages, namely the stage of executing the cleaning agent extraction process, the stage of executing the solvent extraction process, and the stage of executing the cleaning solution extraction process. The cleaning mode can be executed in the aforementioned order, so that when executing the solvent extraction process to extract solvent, it can carry the remaining cleaning agent in the pipeline into the cleaning solution container 230 together.

In some embodiments, the first flow control assembly 330 may include a first three-way solenoid valve 260 and a second three-way solenoid valve 240; a first intermediate pipe 267 is connected between the first three-way solenoid valve 260 and the second three-way solenoid valve 240; the first three-way solenoid valve 260 is controllable to connect the solvent supply line 300 with the first intermediate pipe 267, and cut off the cleaning agent intake line 271; alternatively, the first three-way solenoid valve 260 is controllable to connect the cleaning agent intake line 271 with the first intermediate pipe 267, and cut off the solvent supply line 300; in a third state, the first three-way solenoid valve 260 is controllable to cut off both the solvent supply line 300 and the cleaning agent intake line 271. The second three-way solenoid valve 240 is controllable to connect the first intermediate pipe 267 and the inlet of the fluid pump 110, and cut off the outlet pipe 232; alternatively, the second three-way solenoid valve 240 is controllable to connect the outlet pipe 232 and the inlet of the fluid pump 110, and cut off the first intermediate pipe 267.

In the present embodiment, the first port 261 of the first three-way solenoid valve 260 may be connected to the cleaning agent intake line 271. The second port 262 of the first three-way solenoid valve 260 may be connected to the solvent supply line 300. The third port 263 of the first three-way solenoid valve 260 may be connected to the first port 241 of the second three-way solenoid valve 240 through the first intermediate pipe 267.

The second port 242 of the second three-way solenoid valve 240 may be connected to the outlet pipe 232 of the cleaning solution container 230. The third port 243 of the second three-way solenoid valve 240 may be connected to the inlet of the fluid pump 110. Thus, through the combined use of the first three-way solenoid valve 260 and the second three-way solenoid valve 240, the function of the first flow control assembly 330 can be achieved.

Specifically, when the first three-way solenoid valve 260 connects the solvent supply line 300 and the first intermediate pipe 267 while cutting off the cleaning agent intake line 271, and the second three-way solenoid valve 240 connects the first intermediate pipe 267 and the inlet of the fluid pump 110 while cutting off the outlet pipe 232, the solvent supply line 300 can be connected to the inlet of the fluid pump 110 through the first three-way solenoid valve 260 and the second three-way solenoid valve 240 to achieve extraction of solvent from the solvent supply line 300. When the first three-way solenoid valve 260 connects the cleaning agent intake line 271 and the first intermediate pipe 267 while cutting off the solvent supply line 300, and the second three-way solenoid valve 240 connects the first intermediate pipe 267 and the inlet of the fluid pump 110 while cutting off the outlet pipe 232, the cleaning agent intake line 271 can be connected to the inlet of the fluid pump 110 through the first three-way solenoid valve 260 and the second three-way solenoid valve 240 to achieve extraction of cleaning agent from the cleaning agent container 270. When the second three-way solenoid valve 240 connects the outlet pipe 232 and the inlet of the fluid pump 110 while cutting off the first intermediate pipe 267, the outlet pipe 232 is connected to the inlet of the fluid pump 110 through the second three-way solenoid valve 240 to achieve extraction of cleaning solution from the cleaning solution container 230, at this time, the first three-way solenoid valve 260 may cut off both the solvent supply line 300 and the cleaning agent intake line 271. Of course, since the first intermediate pipe 267 connected to the first three-way solenoid valve 260 is cut off, even if the first three-way solenoid valve 260 has not cut off the solvent supply line 300 and the cleaning agent intake line 271, they can be considered cut off.

In some embodiments, the liquid meal making system 10 may also include a third three-way solenoid valve 210 arranged between the second three-way solenoid valve 240 and the inlet of the fluid pump 110; an edible liquid intake line 121 is connected between the third three-way solenoid valve 210 and the edible liquid module 120. In cleaning mode, the third three-way solenoid valve 210 connects the pipeline between the second three-way solenoid valve 240 and the third three-way solenoid valve 210 with the inlet of the fluid pump 110, and cuts off the edible liquid intake line 121; in dispensing mode, the third three-way solenoid valve 210 connects the edible liquid intake line 121 and the inlet of the fluid pump 110, and cuts off the pipeline between the second three-way solenoid valve 240 and the third three-way solenoid valve 210.

In the present embodiment, the first port 211 of the third three-way solenoid valve 210 may be connected to the third port 243 of the second three-way solenoid valve 240. The second port 212 of the third three-way solenoid valve 210 may be connected to the edible liquid intake line 121, and the third port 213 of the third three-way solenoid valve 210 is connected to the inlet of the fluid pump 110.

In the present embodiment, by connecting the edible liquid intake line 121 through the third three-way solenoid valve 210, it can be suitable for both dispensing mode or cleaning mode. In the dispensing mode or cleaning mode, the connection of pipelines to the inlet of the fluid pump 110 can be switched by switching the third three-way solenoid valve 210. In some embodiments, the third three-way solenoid valve 210 may be provided within the liquid meal maker 100. For example, the three-way solenoid valve originally connecting the inlet of the fluid pump 110 to the edible liquid module 120 in the liquid meal maker 100 can serve as the aforementioned third three-way solenoid valve 210. Of course, in some embodiments, the third three-way solenoid valve 210 may also be provided independently from the liquid meal maker 100.

In some embodiments, the liquid meal maker 100 is provided with an edible liquid outlet 150, a drain outlet 160 and a second flow control assembly 190. The second flow control assembly 190 is respectively connected to the edible liquid outlet 150, the drain outlet 160, the outlet of the fluid pump 110 and the inlet pipe 231.

The second flow control assembly 190 is controllable to connect the outlet of the fluid pump 110 with the inlet pipe 231, and cut off both the edible liquid outlet 150 and drain outlet 160, to execute the cleaning agent extraction process or solvent extraction process. Or, the second flow control assembly 190 is controllable to connect the outlet of the fluid pump 110 with the edible liquid outlet 150, and cut off both the inlet pipe 231 and drain outlet 160, to allow the cleaning solution extracted during the cleaning solution extraction process to flow through the edible liquid outlet 150. Or, the second flow control assembly 190 is controllable to connect the outlet of the fluid pump 110 with the drain outlet 160, and cut off both the inlet pipe 231 and edible liquid outlet 150.

In the present embodiment, in dispensing mode, during the execution of the edible liquid extraction process, the second flow control assembly 190 can connect the outlet of the fluid pump 110 and the edible liquid outlet 150 of the liquid meal maker 100 while cutting off both the inlet pipe 231 and drain outlet 160, allowing the edible liquid entering the edible liquid line to flow out from the edible liquid outlet 150.

In cleaning mode, during the execution of the cleaning agent extraction process or solvent extraction process, the second flow control assembly 190 can connect the outlet of the fluid pump 110 and the inlet pipe 231 of the cleaning solution container 230 while cutting off both the edible liquid outlet 150 and drain outlet 160, to guide the cleaning agent or solvent into the cleaning solution container 230 to mix and form cleaning solution. Furthermore, during the execution of the cleaning solution extraction process, the second flow control assembly 190 can cut off the inlet pipe 231, and connect the outlet of the fluid pump 110 with the edible liquid outlet 150, or, connect the outlet of the fluid pump 110 with the drain outlet 160, to achieve cleaning of the edible liquid outlet 150 or discharge cleaning solution through the drain outlet 160.

In some embodiments, the second flow control assembly 190 includes a fourth three-way solenoid valve 130 and a fifth three-way solenoid valve 140. A discharge pipe 135 is connected between the fourth three-way solenoid valve 130 and the fifth three-way solenoid valve 140. The fourth three-way solenoid valve 130 is controllable to connect the outlet of the fluid pump 110 with the inlet pipe 231, and cut off the discharge pipe 135; alternatively, the fourth three-way solenoid valve 130 is controllable to connect the outlet of the fluid pump 110 with the discharge pipe 135, and cut off the inlet pipe 231. The fifth three-way solenoid valve 140 is controllable to connect the discharge pipe 135 with the drain outlet 160, and cut off the edible liquid outlet 150; alternatively, the fifth three-way solenoid valve 140 is controllable to connect the discharge pipe 135 with the edible liquid outlet 150, and cut off the drain outlet 160.

In the present embodiment, the first port 131 of the fourth three-way solenoid valve 130 may be connected to the outlet of the fluid pump 110. The second port 132 of the fourth three-way solenoid valve 130 may be connected to the inlet pipe 231. The third port 133 of the fourth three-way solenoid valve 130 may be connected to the first port 141 of the fifth three-way solenoid valve 140 through the discharge pipe 135. The second port 142 of the fifth three-way solenoid valve 140 may be connected to the drain outlet 160. The third port 143 of the fifth three-way solenoid valve 140 may be connected to the edible liquid outlet 150.

In the present embodiment, in cleaning mode, the fourth three-way solenoid valve 130 connects the inlet pipe 231 and the outlet of the fluid pump 110 while cutting off the discharge pipe 135, and the extracted cleaning agent or solvent flows into the cleaning solution container 230 through the inlet pipe 231. After completing the preparation of cleaning solution, the fourth three-way solenoid valve 130 can connect the outlet of the fluid pump 110 and the discharge pipe 135 while cutting off the inlet pipe 231, and can switch between the drain outlet 160 and the edible liquid outlet 150 through the fifth three-way solenoid valve 140, achieving cleaning of the discharge pipe 135, drain outlet 160 and edible liquid outlet 150 using the cleaning solution.

In some embodiments, a level sensor 310 may be provided within the cleaning module 200 for measuring the remaining amount of cleaning agent.

In the present embodiment, the level sensor 310 can feed back level signals to the control unit of the liquid meal maker 100, with the level signals indicating the liquid level of the cleaning agent in the cleaning agent container 270. Based on the level signals, the control unit of the liquid meal maker 100 can determine the amount of cleaning agent extracted according to the liquid level changes in the cleaning agent container 270, and stop the cleaning agent extraction process when reaching the required specified dosage, for example, by controlling the first three-way solenoid valve 260 to cut off the cleaning agent intake line 271.

In the present embodiment, the level sensor 310 may use a resistance type level sensor, or a photoelectric level sensor, or a capacitive level sensor, or a pressure type level sensor, which is not limited in the present application.

In some cases, the cleaning agent container 270 may contain a large amount of cleaning agent. While the liquid meal maker 100 only uses a small amount of cleaning agent each time to prepare cleaning solution. This means that the large amount of cleaning agent contained in the cleaning agent container 270 can be used for a long time. However, it is difficult for operators to accurately predict when they need to replace the cleaning agent container or replenish cleaning agent. In the present embodiment, by setting up the level sensor 310 to detect the remaining amount of cleaning agent in the cleaning agent container 270, this level sensor 310 can feed back level signals to the liquid meal maker 100, so that when the cleaning agent in the cleaning agent container 270 is exhausted or nearly exhausted, the liquid meal maker 100 can send a reminder to operators, bringing convenience to operators.

In some embodiments, the cleaning module 200 may also be provided with a cleaning solution flow sensor 320 for sensing the flow rate of cleaning solution flowing out from the cleaning solution container 230. Specifically, the cleaning solution flow sensor 320 may be located at the outlet of the cleaning solution container 230 or within the outlet pipe 232. The cleaning solution flow sensor 320 can send a first flow signal to the control unit of the liquid meal maker 100, allowing the liquid meal maker 100 to control the dosage of extracted cleaning solution based on the received first flow signal.

In some embodiments, the cleaning solution flow sensor 320 may also be used to detect whether the cleaning solution is exhausted. For example, the operation of the fluid pump 110 can be controlled based on the first flow signal. Specifically, when the cleaning solution flow sensor 320 has not detected the passage of any fluid flow and the time duration of no fluid flow detection exceeds a specified threshold, it can be determined that the cleaning solution is exhausted, and the liquid meal maker 100 can control the fluid pump 110 to stop extracting cleaning solution. Furthermore, based on this, it can also control the cleaning solution in the cleaning solution container 230 to be completely consumed or consumed to a specified dosage in each cleaning operation. This can reduce the possibility of bacteria growth in cleaning solution that has not been completely used to some extent.

In some embodiments, the solvent supply line 300 may also be provided with a solvent flow sensor for sensing the flow rate of solvent flowing into the cleaning module 200, to control the dosage of extracted solvent based on the second flow signal received from the solvent flow sensor.

In some embodiments, the cleaning module 200 may be a separate external component from the liquid meal maker 100. The cleaning module 200 can be connected to the fluid pump 110 of the liquid meal maker 100 through pipelines.

Optionally, the liquid meal maker 100 may be an existing liquid meal maker. By using the cleaning module 200 in cooperation with the existing liquid meal maker, cleaning of the edible liquid lines in the liquid meal maker can be conveniently achieved.

Furthermore, the liquid meal making system 10 can also achieve automatic preparation of cleaning solution and cleaning of edible liquid lines using the cleaning solution by providing a detachably installed cleaning module 200 paired with an already designed liquid meal maker 100, while maintaining the original structure of the liquid meal maker 100, reducing the design difficulty of the liquid meal making system to some extent.

In the present embodiment, the cleaning module 200 can be independently installed and detached, and can be connected to the liquid meal makers 100 through pipelines, thus adapted to different liquid meal makers 100, making the liquid meal making system 10 formed by the cleaning module 200 and liquid meal maker 100 have more diverse combination relationships to suit different application scenarios.

Specifically, for example, the cleaning module 200 and liquid meal maker 100 may each have independent housings. Using interfaces provided on the exterior of the housings, pipelines can be used to connect the cleaning module 200 and liquid meal maker 100. When using the liquid meal making system 10, compared to a housing that integrates the cleaning module 200 and liquid meal maker 100, the separated cleaning module 200 and liquid meal maker 100 can have smaller volumes, making them easier to arrange and place flexibly.

In some embodiments, the cleaning module 200 may include a housing (not shown in the figures). The housing forms an isolated compartment separated from the exterior and an accommodating portion having an open state; the cleaning solution container 230 is accommodated in the isolated compartment. The accommodating portion is in the open state to allow a user to place the cleaning agent container 270 into the accommodating portion or remove the cleaning agent container 270 from the accommodating portion.

In the present embodiment, through the isolated compartment formed by the housing, the interior of the isolated compartment is separated from the exterior. Thus, with the cleaning solution container 230 accommodated in the isolated compartment, it is inoperable and may even be invisible to external users. Since the cleaning solution container 230 is non-replaceable and can be reused, this can prevent damage caused by user misoperation to some extent. Furthermore, the cleaning agent container 270 used for containing cleaning agent can serve as a consumable. When the cleaning agent in the cleaning agent container 270 is consumed, the cleaning agent container 270 can be directly replaced. Thus, setting the accommodating portion to have an open state facilitates users in removing the cleaning agent container 270 from the accommodating portion or placing the cleaning agent container 270 into the accommodating portion, bringing convenience to users.

It can be understood that the open state may simply be a state that facilitates user operation of the cleaning agent container 270 provided by the accommodating portion. The housing may be provided with a cover corresponding to the accommodating portion, allowing the accommodating portion to be in the open state by opening the cover. Of course, when there is no need to operate the cleaning agent container 270, the cover can be placed over the accommodating portion.

In the present embodiment, the cleaning agent container 270 can be directly placed in the accommodating portion. Of course, necessary limiting structures or fastening structures for the cleaning agent container 270 may also be provided in the accommodating portion.

In some embodiments, the first flow control assembly 330 may also be accommodated in the isolated compartment. This can also protect the first flow control assembly 330 to some extent, preventing damage caused by external user misoperation, and also avoiding inconvenience to users by being exposed externally.

In the present embodiment, the cleaning module 200 may also include a solvent interface 340, a fluid inlet interface 360 and a fluid outlet interface 350 extending out of the housing from the isolated compartment; wherein the solvent interface 340 is configured to connect with a solvent supply line 300; the fluid inlet interface 360 is configured to connect with the outlet of the fluid pump 110; the fluid outlet interface 350 is configured to connect with the inlet of the fluid pump 110. The first flow control assembly 330 is controllable to connect the cleaning agent intake line 271 and the fluid outlet interface 350, and cut off both the outlet pipe 232 and the solvent interface 340, for implementing the cleaning agent extraction process; or, the first flow control assembly 330 is controllable to connect the solvent interface 340 with the fluid outlet interface 350, and cut off both the outlet pipe 232 and the cleaning agent intake line 271, for implementing the solvent extraction process; or, the first flow control assembly 330 is controllable to connect the outlet pipe 232 and the fluid outlet interface 350, and cut off both the solvent supply line 300 and the cleaning agent intake line 271, for implementing the cleaning solution extraction process.

In the present embodiment, the cleaning module 200 can serve as an independent module and can be connected with external pipelines through its external solvent interface 340, fluid inlet interface 360 and fluid outlet interface 350. For example, the solvent interface 340 can be used to connect the solvent supply line 300, the fluid inlet interface 360 can be used to connect with the outlet of the fluid pump 110, and the fluid outlet interface 350 can be used to connect with the inlet of the fluid pump 110. Furthermore, by setting up the first flow control assembly 330 inside the isolated compartment of the cleaning module 200, multiple pipeline connection functions can be achieved inside the cleaning module 200, giving the cleaning module 200 better universality.

In the present embodiment, the technical features included in the first flow control assembly 330, the functions and effects achieved can be explained by reference to the previous descriptions and will not be repeated here.

In some embodiments, the first flow control assembly 330 includes a first three-way solenoid valve 260 and a second three-way solenoid valve 240. The first three-way solenoid valve 260 is controllable to connect the solvent interface 340 with the first intermediate pipe 267, and cut off the cleaning agent intake line 271; alternatively, the first three-way solenoid valve 260 is controllable to connect the cleaning agent intake line 271 with the first intermediate pipe 267, and cut off the solvent interface 340; alternatively, the first three-way solenoid valve 260 is controllable to cut off both the solvent interface 340 and the cleaning agent intake line 271. The second three-way solenoid valve 240 is controllable to connect the first intermediate pipe 267 and the fluid outlet interface 350, and cut off the outlet pipe 232; alternatively, the second three-way solenoid valve 240 is controllable to connect the outlet pipe 232 and the fluid outlet interface 350, and cut off the first intermediate pipe 267.

In the present embodiment, the first flow control assembly 330 may include the first three-way solenoid valve 260 and the second three-way solenoid valve 240, and the function of the first flow control assembly 330 can be achieved through the cooperation of the first three-way solenoid valve 260 and the second three-way solenoid valve 240. Specifically, when the first three-way solenoid valve 260 connects the solvent interface 340 and the first intermediate pipe 267 while cutting off the cleaning agent intake line 271, and the second three-way solenoid valve 240 connects the first intermediate pipe 267 and the fluid outlet interface 350 while cutting off the outlet pipe 232, it can be used to implement the solvent extraction process. When the first three-way solenoid valve 260 connects the cleaning agent intake line 271 with the first intermediate pipe 267 while cutting off the solvent interface 340, and the second three-way solenoid valve 240 connects the first intermediate pipe 267 and the fluid outlet interface 350 while cutting off the outlet pipe 232, it can be used to implement the cleaning agent extraction process. When the second three-way solenoid valve 240 connects the outlet pipe 232 and the fluid outlet interface 350 while cutting off the first intermediate pipe 267, it can be used to implement the cleaning solution extraction process, at this time, the first three-way solenoid valve 260 may cut off both the solvent interface 340 and the cleaning agent intake line 271. Of course, since the first intermediate pipe 267 connected to the first three-way solenoid valve 260 is cut off, even if the first three-way solenoid valve 260 has not cut off both the solvent interface 340 and the cleaning agent intake line 271, they can be considered cut off.

In the present embodiment, the technical features included in the first flow control assembly 330, the functions and effects achieved can be explained by reference to the previous descriptions and will not be repeated here.

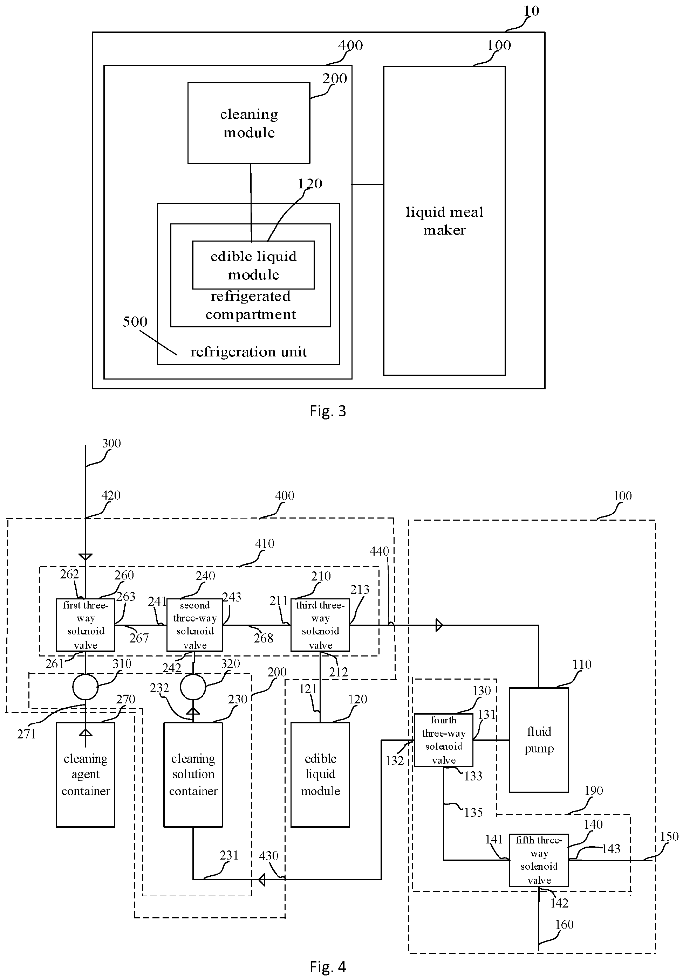

Please refer to Figure 3. In some embodiments, the liquid meal making system 10 may also include a refrigeration device 400 with a refrigeration unit 500, wherein the refrigeration device 400 has a refrigerated compartment for accommodating the edible liquid module 120, and the refrigeration unit 500 serves to cool the refrigerated compartment; wherein the refrigeration device 400 further incorporates the cleaning module 200, it can be understood that the cleaning module 200 is integrated within the refrigeration device 400.

In some cases, the edible liquid contained in the edible liquid module 120 needs to be stored at low temperature to extend its shelf life, exemplarily, in the case that the edible liquid is milk.

The refrigeration device 400 may be separate from the liquid meal maker 100. Specifically, the refrigeration device 400 and liquid meal maker 100 may each have independent housings and be connected through pipelines, allowing the refrigeration device 400 to serve as an accessory device used in cooperation with the liquid meal maker 100.

In the present embodiment, if the refrigeration device 400, liquid meal maker 100, and cleaning module 200 are three separate components, the liquid meal making system 10 might need to occupy a larger countertop space during use. Therefore, the refrigeration device 400 and cleaning module 200 can be integrated together to reduce the space occupied by the liquid meal making system 10. Furthermore, integrating the refrigeration device 400 and cleaning module 200 can also simplify the structure of the liquid meal making system 10 to some extent.

In the present embodiment, the refrigeration device 400 may have a device housing (not shown in the figures), and the housing of the cleaning module 200 may be integrated with the device housing of the refrigeration device 400. Of course, in some embodiments, the housing of the cleaning module 200 and the device housing may just be in an assembly relationship, with each having its own independent housing structure.

In the present embodiment, the refrigeration unit 500 may be a semiconductor refrigeration device, or an evaporator connected to a compressor, which is not limited in the present application.

Please refer to both Figures 3 and 4. In some embodiments, the cleaning module 200 may include a cleaning solution container 230 accommodated within the isolated compartment of the refrigeration device 400 and a cleaning agent intake line 271 arranged in the accommodating portion. The cleaning solution container 230 is connected with an inlet pipe 231 and an outlet pipe 232.

The refrigeration device 400 may also include a device solvent interface 420, a device fluid inlet interface 430 and a device fluid outlet interface 440 extending from inside to outside of the refrigeration device 400. The refrigeration device 400 is also provided with a third flow control assembly 410 and an edible liquid intake line 121. The edible liquid intake line 121 is connected between the third flow control assembly 410 and the edible liquid module 120. The device solvent interface 420 is configured to connect with a solvent supply line 300; the device fluid inlet interface 430 is configured to connect with the outlet of the fluid pump 110; the device fluid outlet interface 440 is configured to connect with the inlet of the fluid pump 110.

The third flow control assembly 410 is controllable to connect the cleaning agent intake line 271 and the device fluid outlet interface 440, and cut off both the device solvent interface 420 and the outlet pipe 232, as well as the edible liquid intake line 121, for implementing the cleaning agent extraction process; or, the third flow control assembly 410 is controllable to connect the device solvent interface 420 with the device fluid outlet interface 440, and cut off both the cleaning agent intake line 271 and the outlet pipe 232, as well as the edible liquid intake line 121, for implementing the solvent extraction process; or, the third flow control assembly 410 is controllable to connect the outlet pipe 232 with the device fluid outlet interface 440, and cut off both the device solvent interface 420 and the cleaning agent intake line 271, as well as the edible liquid intake line 121, for implementing the cleaning solution extraction process; or, the third flow control assembly 410 is controllable to connect the edible liquid intake line 121 with the device fluid outlet interface 440, and cut off both the device solvent interface 420 and the cleaning agent intake line 271, as well as the outlet pipe 232, for implementing the edible liquid extraction process.

In the present embodiment, the refrigeration device 400 can interface with the exterior through the device solvent interface 420, device fluid inlet interface 430 and device fluid outlet interface 440. The third flow control assembly 410 is enclosed within the refrigeration device 400 to control liquid flow direction and connect different pipelines, thereby implementing multiple functions.

In the present embodiment, the third flow control assembly 410 can receive control instructions sent by the liquid meal maker 100 to connect corresponding pipelines according to the received control instructions. The third flow control assembly 410 may be an integral complex valve body and can provide multiple ports to connect any two of the device solvent interface 420, cleaning agent intake line 271, device fluid outlet interface 440, outlet pipe 232 and edible liquid intake line 121 as needed.

In some embodiments, the third flow control assembly 410 may include a first three-way solenoid valve 260, a second three-way solenoid valve 240 and a third three-way solenoid valve 210; a first intermediate pipe 267 is connected between the first three-way solenoid valve 260 and the second three-way solenoid valve 240, and a second intermediate pipe 268 is connected between the second three-way solenoid valve 240 and the third three-way solenoid valve 210.

The first three-way solenoid valve 260 is controllable to connect the device solvent interface 420 with the first intermediate pipe 267, and cut off the cleaning agent intake line 271; alternatively the first three-way solenoid valve 260 is controllable to connect the cleaning agent intake line 271 with the first intermediate pipe 267, and cut off the device solvent interface 420; alternatively, the first three-way solenoid valve 260 is controllable to cut off both the device solvent interface 420 and the cleaning agent intake line 271. The second three-way solenoid valve 240 is controllable to connect the first intermediate pipe 267 and the second intermediate pipe 268, and cut off the outlet pipe 232; alternatively, the second three-way solenoid valve 240 is controllable to connect the outlet pipe 232 and the second intermediate pipe 268, and cut off the first intermediate pipe 267; alternatively, the second three-way solenoid valve 240 is controllable to cut off the outlet pipe 232. The third three-way solenoid valve 210 is controllable to connect the second intermediate pipe 268 and the device fluid outlet interface 440, and cut off the edible liquid intake line 121; alternatively, the third three-way solenoid valve 210 is controllable to connect the edible liquid intake line 121 and the device fluid outlet interface 440, and cut off the second intermediate pipe 268.

In the present embodiment, the function of the third flow control assembly 410 can be achieved through the cooperation of the first three-way solenoid valve 260, second three-way solenoid valve 240 and third three-way solenoid valve 210.

Specifically, when the first three-way solenoid valve 260 connects the device solvent interface 420 and the first intermediate pipe 267 while cutting off the cleaning agent intake line 271, the second three-way solenoid valve 240 connects the first intermediate pipe 267 and the second intermediate pipe 268 while cutting off the outlet pipe 232, and the third three-way solenoid valve 210 connects the second intermediate pipe 268 and the device fluid outlet interface 440 while cutting off the edible liquid intake line 121, the inlet of the fluid pump 110 can be connected with the solvent supply line 300 to implement the solvent extraction process. When the first three-way solenoid valve 260 connects the cleaning agent intake line 271 and the first intermediate pipe 267 while cutting off the device solvent interface 420, the second three-way solenoid valve 240 connects the first intermediate pipe 267 and the second intermediate pipe 268 while cutting off the outlet pipe 232, and the third three-way solenoid valve 210 connects the second intermediate pipe 268 and the device fluid outlet interface 440 while cutting off the edible liquid intake line 121, the inlet of the fluid pump 110 can be connected with the cleaning agent intake line 271 to implement extraction of cleaning agent from the cleaning agent container 270. When the second three-way solenoid valve 240 connects the outlet pipe 232 and the second intermediate pipe 268, and cuts off the first intermediate pipe 267, and the third three-way solenoid valve 210 connects the second intermediate pipe 268 and the device fluid outlet interface 440 while cutting off the edible liquid intake line 121, the inlet of the fluid pump 110 can be connected with the outlet pipe 232 of the cleaning solution container 230 to implement extraction of cleaning solution from the cleaning solution container 230. At this time, the first three-way solenoid valve 260 may cut off both the device solvent interface 420 and the cleaning agent intake line 271. Of course, since the first intermediate pipe 267 connected to the first three-way solenoid valve 260 is cut off, even if the first three-way solenoid valve 260 has not cut off both the device solvent interface 420 and the cleaning agent intake line 271, they can be considered cut off. When the third three-way solenoid valve 210 connects the edible liquid intake line 121 and the device fluid outlet interface 440 while cutting off the second intermediate pipe 268, the inlet of the fluid pump 110 can be connected with the edible liquid intake line 121 to implement the edible liquid extraction process. At this time, the first three-way solenoid valve 260 may cut off both the device solvent interface 420 and the cleaning agent intake line 271, and the second three-way solenoid valve 240 may cut off the outlet pipe 232. Of course, since the second intermediate pipe 268 connected to the second three-way solenoid valve 240 is cut off, even if the first three-way solenoid valve 260 has not cut off both the device solvent interface 420 and the cleaning agent intake line 271, and the second three-way solenoid valve 240 has not cut off the outlet pipe 232, they can be considered cut off.

By integrating the third flow control assembly 410 within the refrigeration device 400, the cleaning module 200, solvent supply line 300 and edible liquid intake line 121 can be combined in an orderly manner, and enhance sharing of pipeline, simplifying the internal structure. In some embodiments, the third flow control assembly 410 may also be partially accommodated in the isolated compartment of the cleaning module 200, for example, the first three-way solenoid valve 260 and the second three-way solenoid valve 240 may be accommodated in the isolated compartment of the cleaning module 200. Of course, in some embodiments, the third flow control assembly 410 may also be completely located within the refrigeration device 400 but not be part of the cleaning module 200.

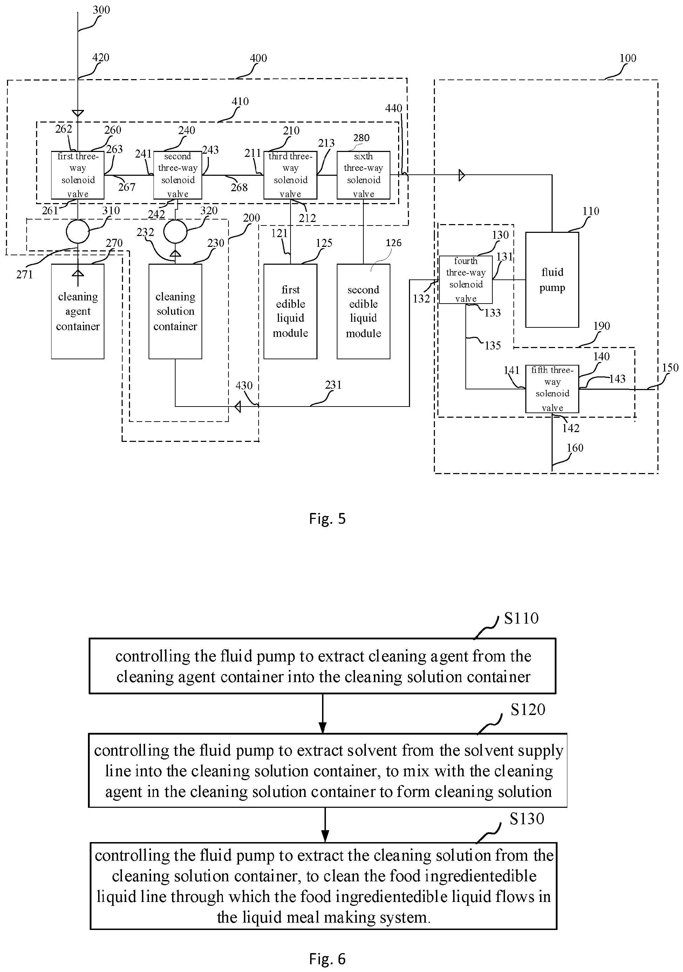

In some embodiments, the liquid meal making system 10 may include multiple edible liquid modules 120, and correspondingly increase the three-way solenoid valves connecting multiple edible liquid modules 120. For example, please refer to Figure 5, for ease of description, introducing a first edible liquid module 125 and a second edible liquid module 126. The liquid meal making system 10 may include the first edible liquid module 125 and the second edible liquid module 126. The first edible liquid module 125 may be connected to the third three-way solenoid valve 210, and a sixth three-way solenoid valve 280 may be added between the third three-way solenoid valve 210 and the fluid pump 110. The functional control of the sixth three-way solenoid valve 280 can be understood by reference to the third three-way solenoid valve 210 and will not be elaborated here.

In the present embodiment, the example is given with multiple edible liquid modules 120 all located within the refrigeration device 400. Of course, the implementation of multiple edible liquid modules 120 is not limited to what is shown in Figure 5, and may also be for cases without a refrigeration device 400 but with multiple edible liquid modules 120 are provided. Or, among multiple edible liquid modules 120, some may be located inside the refrigeration device 400 while others are located outside the refrigeration device 400.

Referring to Figure 6, an embodiment of the present specification also provides a cleaning method of a liquid meal making system. The cleaning method of the liquid meal making system can be applied to a control unit of the liquid meal maker. The control unit may integrate memory and processing circuitry. The memory may store at least part of the program instructions for the liquid meal maker to execute the cleaning agent extraction process, solvent extraction process, cleaning solution extraction process, water extraction process and edible liquid extraction process. The processing circuitry is used to execute the program instructions to control the liquid meal maker to execute corresponding processes.

The liquid meal making system may includes: a liquid meal maker with a fluid pump; an edible liquid module connected to the fluid pump through pipelines, wherein under the driving force of the fluid pump, the edible liquid module is configured to provide edible liquid to the liquid meal maker; a cleaning module connected to the fluid pump through pipelines, the cleaning module including a cleaning solution container. The cleaning method may include the following steps:
Step S 110: Controlling the fluid pump to extract cleaning agent from the cleaning agent container into the cleaning solution container.
Step S120: Controlling the fluid pump to extract solvent from the solvent supply line into the cleaning solution container, to mix with the cleaning agent in the cleaning solution container to form cleaning solution.
Step S 130: Controlling the fluid pump to extract the cleaning solution from the cleaning solution container, to clean the edible liquid line through which the edible liquid flows in the liquid meal making system.

In the present embodiment, when executing the cleaning agent extraction process, the inlet of the fluid pump is connected with the cleaning agent intake line. Through the fluid pump, cleaning agent can be extracted into the cleaning solution container. When executing the solvent extraction process, the inlet of the fluid pump can be connected with the solvent supply line. Through the fluid pump, solvent can be extracted into the cleaning solution container to mix with the cleaning agent to form cleaning solution.

In some embodiments, when executing the cleaning solution extraction process, the inlet of the fluid pump can be connected with the outlet pipe of the cleaning solution container. The formed cleaning solution can be extracted through the fluid pump into the edible liquid line of the liquid meal maker to clean the edible liquid line of the liquid meal maker.

In some embodiments, the cleaning solution extraction process may also include: controlling the fourth three-way solenoid valve and the fifth three-way solenoid valve to connect the outlet of the fluid pump with the drain outlet, thereby discharging the cleaning solution from the drain outlet, alternatively, controlling the fourth three-way solenoid valve and the fifth three-way solenoid valve to connect the outlet of the fluid pump with the edible liquid outlet, thereby discharging the cleaning solution from the edible liquid outlet.

In some embodiments, the step of controlling the fluid pump to extract cleaning agent from the cleaning agent container into the cleaning solution container includes: controlling the outlet of the fluid pump to connect with the inlet of the cleaning solution container configured to contain the cleaning solution; controlling the cleaning agent container configured to contain the cleaning agent to connect with the inlet of the fluid pump; controlling the fluid pump to start, and controlling the fluid pump to stop when the cleaning agent extracted from the cleaning agent container reaches a first specified dosage.

And, the step of controlling the fluid pump to extract solvent from the solvent supply line into the cleaning solution container, to mix with the cleaning agent in the cleaning solution container to form cleaning solution includes: controlling the solvent supply line configured to provide the solvent to connect with the inlet of the fluid pump; controlling the fluid pump to start, and controlling the fluid pump to stop when the solvent entering the cleaning solution container reaches a second specified dosage.

During the execution of the cleaning agent extraction process and solvent extraction process, the liquid meal making system can connect the outlet of the fluid pump with the inlet pipe of the cleaning solution container containing the cleaning solution. Specifically, for example, referring to Figure 2, the liquid meal making system 10 can connect the first port 131 and the second port 132 of the fourth three-way solenoid valve 130, to connect the outlet of the fluid pump 110 with the inlet pipe 231. For example, corresponding to the cleaning agent extraction process, the liquid meal making system 10 can also connect the first port 261 and the third port 263 of the first three-way solenoid valve 260, the first port 241 and the third port 243 of the second three-way solenoid valve 240, the first port 211 and the third port 213 of the third three-way solenoid valve 210, to connect the cleaning agent container 270 and the fluid pump 110. After starting the fluid pump 110, the fluid pump 110 can extract cleaning agent from the cleaning agent container 270 to reach the first specified dosage, and guide the cleaning agent into the cleaning solution container 230. Corresponding to the solvent extraction process, the liquid meal making system can also connect the second port 262 and the third port 263 of the first three-way solenoid valve 260, the first port 241 and the third port 243 of the second three-way solenoid valve 240, the first port 211 and the third port 213 of the third three-way solenoid valve 210, to connect the solvent interface 340 and the fluid pump 110. After starting the fluid pump 110, the fluid pump 110 can extract solvent from the solvent interface 340 to reach the second specified dosage, and guide the solvent into the cleaning solution container 230, thereby mixing with the cleaning agent to form cleaning solution.

In the present embodiment, the first specified dosage may be the dosage of extracted cleaning agent. The second specified dosage may be the dosage of extracted solvent. The first specified dosage and second specified dosage can determine the ratio and dosage of the cleaning solution. The first specified dosage and second specified dosage may be preset, or may be input by users. Or, the first specified dosage and second specified dosage may also be calculated based on specified cleaning solution ratio and dosage. The embodiments of the present specification do not make specific limitations here.

In some embodiments, the cleaning solution formed in the cleaning solution container is adapted to be consumed completely during one execution of the cleaning method.

In some cases, when cleaning the edible liquid line each time, if cleaning solution still remains in the cleaning solution container, the cleaning solution may deteriorate or breed bacteria. Therefore, during one run of cleaning mode by the liquid meal maker, the prepared cleaning solution will be consumed completely during that run of cleaning mode. This can avoid the possibility of cleaning solution deterioration to some extent.

In some embodiments, the method for detecting the consumption amount of cleaning agent can be determined based on the level sensor provided in the cleaning module. Specifically, based on the liquid level in the cleaning agent container fed back by the level sensor, it can be determined whether the cleaning agent has been consumed completely or is nearly exhausted. Specifically, upon receiving the level signal fed back from the level sensor, when the level signal fed back from the level sensor indicates that the cleaning agent in the cleaning agent container is exhausted or nearly exhausted, a reminder is sent, facilitating timely handling by operators, bringing convenience to operators.

In some embodiments, a cleaning solution flow sensor for detecting the flow rate of liquid flowing through the outlet pipe can be provided in the outlet pipe of the cleaning solution container. Upon receiving a first flow signal from the cleaning solution flow sensor, when the first flow signal indicates that no fluid flow is detected and the time duration of no fluid flow detection exceeds a specified threshold, or when the time duration of the fluid pump extracting cleaning solution reaches a specified length, control the fluid pump to stop extracting cleaning solution. Thus, when using cleaning solution to clean the edible liquid line, and the cleaning solution flow sensor detects no cleaning solution flowing through the outlet pipe, it is determined that the cleaning solution has been consumed completely.

In some embodiments, it is also possible to not provided sensors for detecting cleaning solution, but rather establish a correspondence relationship between the total dosage of prepared cleaning solution and the extraction flow rate of the fluid pump. Thus, an extraction duration for cleaning solution can be specified for the fluid pump, and when the time of extracting cleaning solution reaches this specified duration, it is determined that the cleaning solution has been consumed completely.

It can be understood that the specific examples in the present document are only to help those skilled in the art better understand the embodiments of the present specification, and not to limit the scope of the invention.

It can be understood that in various embodiments in the present specification, the size of the sequence numbers of various processes does not imply the order of execution, the execution order of various processes should be determined by their functions and inherent logic, and should not constitute any limitation on the implementation process of the embodiments of the present specification.

It can be understood that the various embodiments described in the present specification can be implemented separately or in combination, and the embodiments of the present specification do not make limitations in this regard.

Unless otherwise stated, all technical and scientific terms used in the embodiments of the present specification have the same meanings as commonly understood by those skilled in the art in the technical field of the present specification. The terms used in the present specification are only for the purpose of describing specific embodiments and are not intended to limit the scope of the present specification. The term "and/or" used in the present specification includes any and all combinations of one or more of the listed related items. The singular forms "a", "said" and "the" used in the embodiments of the present specification and the appended claims are also intended to include the plural forms, unless the context clearly indicates otherwise.

Those skilled in the art can realize that the units and algorithm steps of various examples described in combination with the embodiments disclosed in the present document can be implemented by electronic hardware, or a combination of computer software and electronic hardware. Whether these functions are performed by hardware or software depends on the particular application and design constraint conditions of the technical solution. Professional technical personnel can use different methods to implement the described functions for each specific application, but such implementations should not be considered to be beyond the scope of the present specification.

The above are only specific embodiments of the present specification, but the protection scope of the invention is not limited to this. Any changes or replacements that can be easily conceived by those skilled in the art within the technical scope disclosed in the present specification should be covered within the protection scope of the present specification. Therefore, the protection scope of the invention should be subject to the protection scope of the claims.

## Claims

1. A liquid meal making system (10), **characterized in that**, the liquid meal making system (10) comprising:
a liquid meal maker (100) with a fluid pump (110);
an edible liquid module (120) connected to the fluid pump (110) through pipelines for providing edible liquid;
a cleaning module (200) connected to the fluid pump (110) through pipelines for providing cleaning agent and cleaning solution;
wherein the liquid meal maker (100) has a dispensing mode and a cleaning mode, in the dispensing mode, the edible liquid module (120) provides the edible liquid for making liquid meal, and the dispensing mode comprises an edible liquid extraction process in which the fluid pump (110) extracts the edible liquid from the edible liquid module (120);
in the cleaning mode, the cleaning module (200) provides the cleaning solution for cleaning the edible liquid line through which the edible liquid flows ; the cleaning mode comprises a cleaning agent extraction process and a cleaning solution extraction process; the cleaning agent extraction process involves the fluid pump (110) extracting the cleaning agents from the cleaning module (200); the cleaning solution extraction process involves the fluid pump (110) extracting the cleaning solutions from the cleaning module (200);
wherein the edible liquid extraction process, the cleaning agent extraction process and the cleaning solution extraction process all share the use of the fluid pump (110).

2. The liquid meal making system (10) according to claim 1, **characterized in that**, the liquid meal maker (100) further comprises a rinsing mode, wherein in the rinsing mode, water is used to rinse the edible liquid line;
wherein the rinsing mode comprises a water extraction process in which the fluid pump (110) extracts water, and wherein the water extraction process, the edible liquid extraction process, the cleaning agent extraction process and the cleaning solution extraction process all share the use of the fluid pump (110).

3. The liquid meal making system (10) according to claim 1, **characterized in that**, the cleaning module (200) comprises a cleaning solution container (230), wherein in the cleaning agent extraction process, the cleaning agent is extracted by the fluid pump (110) into the cleaning solution container (230);
wherein the cleaning mode further comprises a solvent extraction process, wherein in the solvent extraction process, the fluid pump (110) is used to extract solvent into the cleaning solution container (230); wherein the solvent mixes with the cleaning agent in the cleaning solution container (230) to form the cleaning solution.

4. The liquid meal making system (10) according to claim 3, **characterized in that**, the cleaning module (200) is provided with a cleaning agent intake line (271); the cleaning agent intake line (271) is configured to extend into a cleaning agent container (270); the cleaning solution container (230) is connected with an inlet pipe (231) and an outlet pipe (232); the outlet of the fluid pump (110) is connected with the inlet pipe (231); the liquid meal making system (10) further comprises a first flow control assembly (330), the first flow control assembly (330) is respectively connected with a solvent supply line (300), the cleaning agent intake line (271), the outlet pipe (232) and the inlet of the fluid pump (110);
wherein the first flow control assembly (330) is controllable to connect the cleaning agent intake line (271) with the inlet of the fluid pump (110), and cut off both the outlet pipe (232) and the solvent supply line (300), for implementing the cleaning agent extraction process; or,
the first flow control assembly (330) is controllable to connect the solvent supply line (300) with the inlet of the fluid pump (110), and cut off both the outlet pipe (232) and the cleaning agent intake line (271), for implementing the solvent extraction process; or,
the first flow control assembly (330) is controllable to connect the outlet pipe (232) with the inlet of the fluid pump (110), and cut off both the cleaning agent intake line (271) and the solvent supply line (300), for implementing the cleaning solution extraction process.

5. The liquid meal making system (10) according to claim 4, **characterized in that**, the first flow control assembly (330) comprises a first three-way solenoid valve (260) and a second three-way solenoid valve (240); a first intermediate pipe (267) is connected between the first three-way solenoid valve (260) and the second three-way solenoid valve (240);
wherein the first three-way solenoid valve (260) is controllable to connect the solvent supply line (300) with the first intermediate pipe (267), and cut off the cleaning agent intake line (271); alternatively, the first three-way solenoid valve (260) is controllable to connect the cleaning agent intake line (271) with the first intermediate pipe (267), and cut off the solvent supply line (300); alternatively, the first three-way solenoid valve (260) is controllable to cut off both the solvent supply line (300) and the cleaning agent intake line (271);
wherein the second three-way solenoid valve (240) is controllable to connect the first intermediate pipe (267) and the inlet of the fluid pump (110), and cut off the outlet pipe (232); alternatively, the second three-way solenoid valve (240) is controllable to connect the outlet pipe (232) and the inlet of the fluid pump (110), and cut off the first intermediate pipe (267).

6. The liquid meal making system (10) according to claim 5, **characterized in that**, the liquid meal making system (10) further comprises a third three-way solenoid valve (210) arranged between the second three-way solenoid valve (240) and the inlet of the fluid pump (110); an edible liquid intake line (121) is connected between the third three-way solenoid valve (210) and the edible liquid module (120);
wherein in the cleaning mode, the third three-way solenoid valve (210) not only connects the pipeline between the second three-way solenoid valve (240) and the third three-way solenoid valve (210) with the inlet of the fluid pump (110), but also simultaneously cuts off the edible liquid intake line (121);
in the dispensing mode, the third three-way solenoid valve (210) not only connects the edible liquid intake line (121) and the inlet of the fluid pump (110), but also simultaneously cuts off the pipeline between the second three-way solenoid valve (240) and the third three-way solenoid valve (210).

7. The liquid meal making system (10) according to claim 3, **characterized in that**, the cleaning solution container (230) is connected with an inlet pipe (231); the liquid meal maker (100) is provided with an edible liquid outlet (150), a drain outlet (160) and a second flow control assembly (190); the second flow control assembly (190) is respectively connected with the edible liquid outlet (150), the drain outlet (160), the outlet of the fluid pump (110) and the inlet pipe (231);
wherein the second flow control assembly (190) is controllable to connect the outlet of the fluid pump (110) with the inlet pipe (231), and cut off both the edible liquid outlet (150) and the drain outlet (160), to execute the cleaning agent extraction process or the solvent extraction process; or,
the second flow control assembly (190) is controllable to connect the outlet of the fluid pump (110) with the edible liquid outlet (150), and cut off both the inlet pipe (231) and the drain outlet (160), to allow the cleaning solution extracted during the cleaning solution extraction process to flow through the edible liquid outlet (150); or,
the second flow control assembly (190) is controllable to connect the outlet of the fluid pump (110) with the drain outlet (160), and cut off both the inlet pipe (231) and the edible liquid outlet (150).

8. The liquid meal making system (10) according to claim 7, **characterized in that**, the second flow control assembly (190) comprises a fourth three-way solenoid valve (130) and a fifth three-way solenoid valve (140); a discharge pipe (135) is connected between the fourth three-way solenoid valve (130) and the fifth three-way solenoid valve (140);
wherein the fourth three-way solenoid valve (130) is controllable to connect the outlet of the fluid pump (110) with the inlet pipe (231), and cut off the discharge pipe (135); alternatively, the fourth three-way solenoid valve (130) is controllable to connect the outlet of the fluid pump (110) with the discharge pipe (135), and cut off the inlet pipe (231);
wherein the fifth three-way solenoid valve (140) is controllable to connect the discharge pipe (135) with the drain outlet (160), and cut off the edible liquid outlet (150); alternatively, the fifth three-way solenoid valve (140) is controllable to connect the discharge pipe (135) with the edible liquid outlet (150), and cut off the drain outlet (160).

9. The liquid meal making system (10) according to claim 1, **characterized in that**, the cleaning module (200) is provided with a level sensor (310) for measuring the remaining amount of the cleaning agent; and/or,
the cleaning module (200) comprises a cleaning solution container (230) for containing the cleaning solution, and the cleaning module (200) is provided with a cleaning solution flow sensor (320) for sensing the flow rate of the cleaning solution flowing out from the cleaning solution container (230); and/or,
the cleaning module (200) is a separate external component from the liquid meal maker (100).

10. The liquid meal making system (10) according to claim 1, **characterized in that**, the cleaning module (200) comprises a housing and a cleaning solution container (230); the housing forms an isolated compartment separated from the exterior and an accommodating portion having an open state; the cleaning solution container (230) is accommodated in the isolated compartment; the accommodating portion is in the open state to allow a user to place the cleaning agent container (270) into the accommodating portion or remove the cleaning agent container (270) from the accommodating portion.

11. The liquid meal making system (10) according to claim 10, **characterized in that**, the cleaning module (200) further comprises a first flow control assembly (330) accommodated in the isolated compartment, and a cleaning agent intake line (271) arranged in the accommodating portion; the cleaning solution container (230) is connected with an inlet pipe (231) and an outlet pipe (232);
the cleaning module (200) further comprises a solvent interface (340), a fluid inlet interface (360) and a fluid outlet interface (350) extending out of the housing from the isolated compartment; wherein the solvent interface (340) is configured to connect with a solvent supply line (300); the fluid inlet interface (360) is configured to connect with the outlet of the fluid pump (110); the fluid outlet interface (350) is configured to connect with the inlet of the fluid pump (110);
wherein the first flow control assembly (330) is controllable to connect the cleaning agent intake line (271) and the fluid outlet interface (350), and cut off both the outlet pipe (232) and the solvent interface (340), for implementing the cleaning agent extraction process; or, the first flow control assembly (330) is controllable to connect the solvent interface (340) with the fluid outlet interface (350), and cut off both the outlet pipe (232) and the cleaning agent intake line (271), for implementing the solvent extraction process; or, the first flow control assembly (330) is controllable to connect the outlet pipe (232) and the fluid outlet interface (350), and cut off both the solvent supply line (300) and the cleaning agent intake line (271), for implementing the cleaning solution extraction process.

12. The liquid meal making system (10) according to claim 10, **characterized in that**, the liquid meal making system (10) further comprises a refrigeration device (400) with a refrigeration unit, wherein the refrigeration device (400) has a refrigerated compartment for accommodating the edible liquid module (120); the refrigeration unit serves to cool the refrigerated compartment; wherein the refrigeration device (400) further incorporates the cleaning module (200).

13. The liquid meal making system (10) according to claim 12, **characterized in that**, the cleaning module (200) further comprises a cleaning agent intake line (271) arranged in the accommodating portion; the cleaning solution container (230) is connected with an inlet pipe (231) and an outlet pipe (232);
the refrigeration device (400) further comprises a device solvent interface (420), a device fluid inlet interface (430) and a device fluid outlet interface (440) extending from inside to outside of the refrigeration device (400), the refrigeration device (400) is also provided with a third flow control assembly (410) and an edible liquid intake line (121), the edible liquid intake line (121) is connected between the third flow control assembly (410) and the edible liquid module (120); wherein the device solvent interface (420) is configured to connect with a solvent supply line (300); the device fluid inlet interface (430) is configured to connect with the outlet of the fluid pump (110); the device fluid outlet interface (440) is configured to connect with the inlet of the fluid pump (110);
wherein the third flow control assembly (410) is controllable to connect the cleaning agent intake line (271) and the device fluid outlet interface (440), and cut off both the device solvent interface (420) and the outlet pipe (232) , as well as the edible liquid intake line (121), for implementing the cleaning agent extraction process; or, the third flow control assembly (410) is controllable to connect the device solvent interface (420) with the device fluid outlet interface (440), and cut off both the cleaning agent intake line (271) and the outlet pipe (232), as well as the edible liquid intake line (121), for implementing the solvent extraction process; or, the third flow control assembly (410) is controllable to connect the outlet pipe (232) with the device fluid outlet interface (440), and cut off both the device solvent interface (420) and the cleaning agent intake line (271), as well as the edible liquid intake line (121), for implementing the cleaning solution extraction process; or, the third flow control assembly (410) is controllable to connect the edible liquid intake line (121) with the device fluid outlet interface (440), and cut off both the device solvent interface (420) and the cleaning agent intake line (271), as well as the outlet pipe (232), for implementing the edible liquid extraction process.

14. A cleaning method of a liquid meal making system (10), **characterized in that**, the liquid meal making system (10) comprising:
a liquid meal maker (100) with a fluid pump (110);
an edible liquid module (120) connected to the fluid pump (110) through pipelines; wherein under the driving force of the fluid pump (110), the edible liquid module (120) is configured to provide edible liquid to the liquid meal maker (100);
a cleaning module (200) connected to the fluid pump (110) through pipelines, the cleaning module (200) comprises a cleaning solution container (230);
the method comprising:
controlling the fluid pump (110) to extract cleaning agent from a cleaning agent container (270) into the cleaning solution container (230);
controlling the fluid pump (110) to extract solvent from a solvent supply line (300) into the cleaning solution container (230), to mix with the cleaning agent in the cleaning solution container (230) to form cleaning solution;
controlling the fluid pump (110) to extract the cleaning solution from the cleaning solution container (230), to clean the edible liquid line through which the edible liquid flows in the liquid meal making system (10).

15. The method according to claim 14, **characterized in that**, the step of controlling the fluid pump (110) to extract cleaning agent from a cleaning agent container (270) into the cleaning solution container (230) comprises:
controlling the outlet of the fluid pump (110) to connect with the inlet of the cleaning solution container (230) configured to contain the cleaning solution;
controlling the cleaning agent container (270) configured to contain the cleaning agent to connect with the inlet of the fluid pump (110);
controlling the fluid pump (110) to start, and controlling the fluid pump (110) to stop when the cleaning agent extracted from the cleaning agent container (270) reaches a first specified dosage;
and, the step of controlling the fluid pump (110) to extract solvent from a solvent supply line (300) into the cleaning solution container (230), to mix with the cleaning agent in the cleaning solution container (230) to form cleaning solution comprises:
controlling the solvent supply line (300) configured to provide the solvent to connect with the inlet of the fluid pump (110);
controlling the fluid pump (110) to start, and controlling the fluid pump (110) to stop when the solvent entering the cleaning solution container (230) reaches a second specified dosage.
